# EUROPEAN PATENT SPECIFICATION

(11) **EP 3 763 549 B1**
(45) Date of publication and mention of the grant of the patent: **13.04.2022**
(21) Application number: 20183776.2
(22) Date of filing: 02.07.2020
(51) Int. Cl.: B60C 11/16, B60C 11/24

(54) **A POLYMER STUD AND A TIRE COMPRISING A POLYMER STUD**
POLYMER-SPIKE UND REIFEN MIT EINEM POLYMER-SPIKE
CRAMPON EN POLYMÈRE ET PNEUMATIQUE COMPRENANT UN CRAMPON EN POLYMÈRE

(30) Priority: 08.07.2019 US 201962871489 P
(43) Date of publication of application: 13.01.2021
(73) Proprietor: The Goodyear Tire & Rubber Company, Akron, OH 44316 (US)
(72) Inventor: PONS, Frederic Michel-Jean, F-57100 Thionville (FR); GEORGES, Damian Wilhelm, L-7346 Mullendorf (LU)
(74) Representative: Goodyear IP Law

(56) References cited:
- RU-C1- 2 148 498
- US-A- 3 719 478
- US-A1- 2009 114 322

## Description

### Field of the Invention

The present invention is directed to a polymeric anti-skid stud which is of particular value for use on winter tires. Such studs have the purpose of improving friction to provide better traction and skid resistance on ice, such as ice that can be encountered on icy surfaces including icy roads. The present invention is also directed to a tire comprising such studs.

### Background of the Invention

Studs for winter tires have been known for decades and have helped to significantly improve traction characteristics on snow and particularly ice covered surfaces to improve the grip of the tire to icy roads and other icy pavements. However, conventional tire studs also have some drawbacks which have limited their use in winter tires. For example, conventional tire studs typically have a body which is made of a metal material, such as aluminum, and have a pin extending from the body for ensuring non-skid behavior of the tire on icy roads. Aluminum has however the disadvantage of generally high cost and fluctuating prices. Moreover, the use of a metal body may result in relatively high level of noise generation.

An example of a conventional metal anti-skid stud for a tire is disclosed in WO2009/141506 A1. The anti-skid stud revealed by this reference includes a body equipped with a base flange and a pin, which forms the grip and wear surface of the anti-skid stud, fitted partly inside the opposite end of the body to the base flange, characterized in that the anti-skid stud further includes a sleeve fitted around the body, in order to create a second grip surface in the anti-skid stud, the sleeve being of a hard metal, or a material like a hard metal.

Recently studs based on polymeric material have been developed which may overcome some of these disadvantages associated with conventional studs. An example of a polymer stud is given in WO2017/198352. More specifically, this reference discloses a stud for a pneumatic vehicle tire having a stud body made from a plastic which contains reinforcing fibres, and a stud pin made from a hard metal which is positioned in the stud body and protrudes out of the stud body, wherein the stud body has a main body part and a base part which protrudes laterally beyond the main body part. The stud pin reaches in the stud body substantially as far as the level of the base part, and has a pin shank with at least one anchoring element which widens the radially inner end region of the pin shank, wherein the reinforcing fibres in the central region of the base part are oriented mainly and substantially perpendicularly with respect to the stud pin. In any case, the use of polymeric material in tire studs is not very well established and significant room for improvement in stud design yet remains.

Another stud of polymeric material is known from RU2148498C1. A further stud portion having a sintered body portion impregnated with colored plastic material is disclosed in US3719478A.

### Summary of the Invention

A first object of the invention may be to allow an advanced visual inspection of the wear status of the stud.

A second object of the invention may be to provide tire studs with further functions beyond the classical anti-skid properties.

Another object of the invention may be to provide a new means allowing for the visual determination of the remaining tread depth.

The present invention is defined by the scope of the independent claims. Further advantageous embodiments of the invention are provided in the dependent claims.

In one aspect of the invention, a winter or anti-skid tire stud (or in other words spike) is provided, wherein the stud comprises a body made of polymer-based material, the body comprising a top portion comprising polymer-based material having a first color, and a bottom portion comprising polymer-based material having a second color (different from the first color). The stud comprises also a pin extending out of the top portion for contacting the road.

Providing an anti-skid stud with different colors from top to bottom by means of respective polymer-based materials allows an inspection of the stud's wear upon the tire tread's wear. This helps to indicate when the studs are too worn to ensure sufficient anti-skid behavior.

In particular, the tire or winter tire may have tread blocks having a plurality of sipes and may optionally have the "Three-Peak Mountain Snow Flake" symbol on a tire sidewall.

Anti-skid studs can also be described as ice studs and/or the pin may also be described as anti-skid pin.

In an embodiment, the tire stud has an elongated shape with two ends wherein the top portion is arranged at a first end and the bottom portion is arranged at the second end or in other words, each of the portions extends from its respective end in the direction of the opposite end.

In another embodiment, the pin extends through the top portion into the bottom portion. Thus, the different colors of the top and bottom portions may indicate whether a sufficient length of the pin is still anchored in the stud. In particular, a short length of pin left may result in loss of the pin or in total abrasion of the pin such that the anti-skid properties are impaired.

In another embodiment, the pin extends into the stud body in the direction of the bottom portion, and optionally extends more than 5% of the length of the stud body out of the stud. Pins of studs protrude or extend typically also during tire wear out of the stud body due to typical wear on the road.

In another embodiment, the bottom portion of the stud comprises a (optionally circumferential) projection for securing the stud in a hollow space for receiving the stud in a tire tread block. For instance, the stud can by pressed or shot with a device into an aperture in the tire's tread; for the sake of locking the stud in the tread the stud may have one or more projections. Methods to apply studs to apertures in tires are known in the art. In particular, the process may be the same as for aluminum studs.

In still another embodiment, the stud body comprises an intermediate portion between the top portion and the bottom portion, wherein the intermediate portion has a smaller diameter than the maximum diameter of at least one of the top portion and the bottom portion. The diameter is measured perpendicular to (the direction of extension of) the pin. This may help to anchor the stud. In general, said body portions may essentially consist of the polymer-based materials and/or may extend to the outer surface of the stud.

In yet another embodiment, the stud body comprises an intermediate portion between the top portion and the bottom portion, the intermediate portion comprising a polymer-based material having a third color. Such a third color could be used as warning that the bottom portion is reached soon upon wear. In particular, the first, second and third colors are different.

In yet another embodiment, the pin has at least one projection for securing the pin in the body of the stud, wherein the projection is optionally located at the end of the pin anchored in the body of the stud. While pins are typically press-fit into the body of metal studs, this is of less preference for polymer studs such that an additional interlocking by the shape of the stud may be desirable.

In another embodiment, the top portion has a first maximum diameter which is at least 5% larger than the diameter of a shaft portion arranged between the top portion and the bottom portion, wherein the maximum diameter of the bottom portion is optionally at least 10% larger than the diameter of the top portion and/or at least 15% larger than the diameter of the shaft portion.

In another embodiment, the stud is a single-flange stud.

In still another embodiment, the stud is a multi-flange stud, in particular a two-flange stud.

In still another embodiment, the stud has an essentially cylindrical shape. Cylindrical may include also non-circular cross sections such as polygonal cross sections. The pin may have a rod-like shape which could have different cross-sectional shapes (perpendicular to its length), e.g. polygonal and/or bow shaped. Polygonal or bow-shaped forms may help to improve the anchoring of the pin in the stud body material and may also increase the grip on the road.

In a preferred embodiment of the invention, the polymer-based material is a polymeric material or at least one polymer. In another embodiment, the polymer or polymeric material is fiber-reinforced such as with fibers mentioned herein below.

In another embodiment, the pin is made of tungsten carbide.

In yet another embodiment, the pin is made of steel.

In another embodiment, the polymer-based material is a thermoplastic material or a thermosetting material (thermosetting polymer, resin, or plastic). For instance, such materials may have a preferred hardness.

In another embodiment, the polymer-based material is one or more of: polyetheretherketone (PEEK), polyphenylene sulfide (PPS), polyphenyl ether (PPE), polypropylene (PP), polyethylene (PE), polycarbonate (PC), polysulfone (PSU), polyetherimide (PEI), polyphenylene sulfone (PPSU), polyarylamide (PARA), Nylon, Nylon 66, and melamine, a phenolic resin, a melamine resin, an epoxy resin, a benzoxazine, a cyanate ester, a polyurethane, a polyacrylic ester, and a polyimide. Optionally, the polymer-based material is fiber reinforced. In particular, glass fibers, woven or staple fibers may be utilized.

In another embodiment of this invention the polymer-based material is comprised of syndiotactic 1,2-polybutadiene (SPBD). SPBD offers the advantage of becoming securely bound to the rubber of the tire tread. It is believed that the syndiotactic 1,2-polybutadiene (SPBD) co-cures with the rubber of the tire tread during the curing of the tire. In any case, strong adhesion between the SPBD and the tire tread rubber results.

The SPBD that can be used in the practice of the subject invention normally has more than 65% of its monomeric units in a syndiotactic 1,2-configuration. Such SPBD can be prepared in an inert organic solvent utilizing the technique described in United States Patent 3,901,868 or in an aqueous medium utilizing the process described in United States Patent 4,506,031. United States Patent 4,506,031 more specifically reveals a process for producing polybutadiene composed essentially of SPBD comprising the steps of: (A) preparing a catalyst component solution by dissolving, in an inert organic solvent containing 1,3-butadiene (a) at least one cobalt compound selected from the group consisting of (i) .beta.-diketone complexes of cobalt, (ii) .beta.-keto acid ester complexes of cobalt, (iii) cobalt salts of organic carboxylic acids having 6 to 15 carbon atoms, and (iv) complexes of halogenated cobalt compounds of the formula CoXₙ, wherein X represents a halogen atom and n represents 2 or 3, with an organic compound selected from the group consisting of tertiary amine alcohols, tertiary phosphines, ketones, and N,N-dialkylamides, and (b) at least one organoaluminum compound of the formula AlR₃, wherein R represents a hydrocarbon radical of 1 to 6 carbon atoms; (B) preparing a reaction mixture by mixing said catalyst component solution with a 1,3-butadiene/water mixture containing desired amounts of said 1,3-butadiene; (C) preparing a polymerization mixture by mixing carbon disulfide throughout said reaction mixture, and (D) polymerizing said 1,3-butadiene in said polymerization mixture into polybutadiene while agitating said polymerization mixture. In the process described therein the crystallinity and melting point of the SPBD can be controlled by adding alcohols, ketones, nitriles, aldehydes or amides to the polymerization mixture.

The SPBD utilized in making the tire studs of this invention has a melting point of 160ºC or less. The SPBD will normally have a melting point within the range of 70ºC to 160C. It is generally preferred for the SPBD utilized in making tire studs of this invention to have a melting point which is within the range of 80ºC to 150ºC with a melting point which is within the range of 90ºC to 125ºC being most preferred. The melting points referred to herein are the minimum endotherm values determined from DSC (differential scanning calorimetry) curves.

The compositions utilized in making the tire studs of this invention can optimally be a blend which is comprised of the SPBD and at least one rubber which is cocurable with the SPBD. The rubber used in such blends can be virtually any type of elastomer which contains unsaturation that allows for sulfur curing. Typically, the elastomer will be one or more polydiene rubbers. Some representative examples of suitable polydiene rubbers include cis-1,4-polybutadiene, natural rubber, synthetic polyisoprene, styrene butadiene rubber, EPDM (ethylene-propylene-diene monomer) rubbers, isoprene-butadiene rubbers, and styrene-isoprene-butadiene rubbers. In many cases it will be desirable to utilize a combination of diene rubbers in the blend. For instance, the rubber portion of the blend can be a combination of chlorobutyl rubber, natural rubber, and EPDM rubber. It is particularly preferred to utilize a combination which contains from about 30 weight percent to about 80 weight percent chlorobutyl rubber, from about 15 weight percent to about 55 weight percent natural rubber, and from about 2 weight percent to about 10 weight percent EPDM rubber as the rubber component in such blends. A rubber composition which contains from about 55 weight percent to about 65 weight percent chlorobutyl rubber, from about 25 weight percent to about 45 weight percent natural rubber, and from about 3 weight percent to about 7 weight percent EPDM rubber is more highly preferred.

The SPBD blend utilized will normally contain from about 25 weight percent to about 75 weight percent SPBD and from about 75 weight percent to about 25 weight percent elastomers which are cocurable with the SPBD. The inclusion of high levels of SPBD results in better adhesion, abrasion, and tear resistance for the cured material. High levels of SPBD also result in increased green strength and stiffness. Additionally, the use of high levels of SPBD reduces green tack which makes handling. However, the incorporation of large amounts of SPBD into the blend also results in reduced flexibility and modulus. Accordingly, for the best balance of overall properties, the blend utilized will contain from about 33 weight percent to about 67 weight percent SPBD and from about 67 weight percent to about 33 weight percent cocurable rubbers. The blends which are most highly preferred will contain from about 45 weight percent to about 55 weight percent SPBD and from about 55 weight percent to about 45 weight percent of the elastomeric component.

The SPBD used in making the blends from which the appliques are formed is generally incorporated into the blend in powder or pellet form. In other words, the SPBD is in the form of a powder or pellet at the time it is compounded with the rubber component utilized in making the blend of which the decorative applique is comprised. The SPBD utilized in accordance with this invention can be reduced to powder form by grinding or another appropriate technique.

The SPBD powder or pellets can be mixed into the rubber component utilizing standard mixing techniques. However, the mixing is normally carried out at a temperature which is at least as high as the melting point of the SPBD being utilized. During the mixing procedure, the SPBD powder pellets are fluxed into the rubber with additional desired compounding ingredients. Such mixing is typically carried out in a Banbury mixer, a mill mixer or in some other suitable type of mixing device.

Such blends of SPBD and rubbers will also contain other standard rubber chemicals. For instance, such blends will additionally contain sulfur and at least one desired colorant or pigment. They will also typically contain other rubber chemicals, such as antioxidants, accelerators, oils, and waxes in conventional amounts. For instance, the SPBD/rubber blend will normally contain from about 0.2 to about 8 phr of sulfur. It is generally preferred for the blend to contain from about 0.5 to 4 phr of sulfur with it being most preferred for such blends to contain from 1 to 2.5 phr of sulfur. A primary accelerator is generally also present at a concentration which is within the range of about 0.1 to about 2.5 phr. It is normally preferred for the primary accelerator to be present at a concentration which is within the range of about 0.2 to about 1.5 phr with it being most preferred for the primary accelerator to be at a concentration of 0.3 to 1 phr. Secondary accelerators will also commonly be utilized at a concentration which is within the range of about 0.02 to about 0.8 phr. Secondary accelerators are preferably utilized at a concentration of 0.05 to 0.5 phr with the utilization of 0.1 to 0.3 phr of a secondary accelerator being most preferred. Such SPBD/rubber blends will typically contain from about 1 to about 10 phr of various processing oils and it is generally preferred for such blends to contain from about 2.5 to about 7.5 phr of processing oils. The SPBD/rubber blend will generally contain from about 25 phr to about 100 phr of various. It is normally preferred for such blends to contain from about 40 phr to about 80 phr fillers. It should be noted that titanium dioxide acts as both a filler and a white pigment.

In yet another embodiment, the polymer-based material is colored by means of pigments or dyes. In particular, pigments could be mineral pigments or organic pigments. Dyes could be organic dyes. The person skilled in the art knows which pigments or dyes to use to achieve the desired color.

In still another embodiment, the top portion has a green or black color and the bottom portion has a red color. These examples of color distribution may help the user to understand intuitively the wear status of the stud. The black color and red color combination has the further advantage of just alerting the user when really necessary. This may be combined with a third color in an intermediate portion.

In yet another embodiment, the stud has an intermediate portion between the top portion and the bottom portion having an orange or yellow color. This further color could make the user aware that the stud will be worn soon upon further use.

In still another embodiment, the pin extends in parallel to a length / extension of the stud along a central axis of the stud, wherein the pin extends optionally at least over a third of the length of the stud (in particular when the stud is unworn). Such a shape and arrangement can improve the fixation of the pin in the stud and/or the grip of the stud on the road, in particular icy road.

In another embodiment, the pin extends through the entire top portion into the direction of the bottom portion and optionally into the bottom portion. This may be helpful as the pin is not completely worn before the second or third portion are reached.

In still another embodiment, the stud has an intermediate portion between the top portion and the bottom portion, the intermediate portion having at least a section having a third color and wherein the pin extends through the top portion having the first color and the intermediate portion having the third color into a part of the bottom portion having the second color, wherein optionally at least 5% of the length (e.g. original or unworn length) of the pin extends into the bottom portion having the second color. For instance, this results in showing the first color when the stud is still in relatively new shape, showing the third color (which is the second color the user will see upon wear) as a warning upon further wear and finally the second color (which is the third color the user will see upon further stud wear in this example) which indicates that the stud is too worn. For instance, that could mean that the pin will soon fall out or be worn too much to provide desired non-skid properties on icy roads. Loosing studs and or pins of studs in significant number may constitute a severe safety risk as the same tire has considerably worse non-skid behavior without studs than with functioning studs/spikes.

In general, the colors and/or polymer-based material having the color may extend over the full (radial) height of their respective portions. The body portions may essentially consist of the polymer-based materials or at least 50%, preferably at least 80% are made of the polymer-based and colored material such that the color of each portion is (continuously) visible over the wear of the respective portion.

In another aspect of the invention, a tire is provided, the tire comprising multiple studs according to the abovementioned aspect of the invention and/or one or more of its embodiments. Preferably, the tire further comprises a tread and/or tread blocks, wherein multiple of said tread blocks comprise an anti-skid stud having a body made of polymer-based material, the stud body comprising a top portion comprising polymer-based material having a first color, a bottom portion comprising polymer-based material having a second color which is different from the first color, and wherein the anti-skid stud further has a pin extending out of the top portion for contacting the road.

Thus, the tire, for instance a winter and/or snow tire, comprising the studs has means for indicating the wear of the studs. Optionally, the color change of studs upon wear may additionally be used to indicate the wear of the tread.

In case the stud shall be used in addition as a tread wear indicator, the bottom portion and/or the second color portion may have its radially outer edge, or in other words terminate, at a depth of less than 2 mm, preferably at about 1.6 mm, measured in a radial direction from the bottom of the deepest or adjacent circumferential groove of the tire.

In an embodiment, a top surface of the top portion of the stud is essentially flush with the (radially outermost) tread block surface when the tire or the tire tread is unworn, or is positioned between 0.5 mm and 0.3 mm (preferably between 0.8 and 0.25 mm) below the (radially outermost) tread block surface, wherein the pin extends essentially in an outer radial direction of the tire out of the stud body, and optionally out of the tread block or tread.

In another embodiment, the pin extends through the top portion into the bottom portion and wherein the color of the top portion and the bottom portion indicate the wear of the stud (and of the tire tread) as the stud and the tread blocks wear upon driving.

In another aspect of the invention, a use of the above mentioned stud(s) or a method of using such studs is provided. In particular, this aspect is directed to the use of one or more anti-skid tire studs according to one or more of the aforementioned embodiments in a tire or tire tread to indicate the wear of the studs and/or the wear of the tire tread upon driving (or in other words upon driving the tire on the ground).

It is emphasized that the features of one or more of the above aspects and embodiments may be combined with one another.

A reference to the top portion of the stud may for example be understood as the portion of the stud (contacting first the road upon driving), i.e. the radially outer(most) portion of the stud. Similarly, the bottom portion of the stud may be for instance understood as the radially inner(most) portion of the stud when mounted in the tire tread. The pin for contacting the road may usually extend out of the top portion in the radial direction of the tire.

In another embodiment, the tire is a winter tire, in particular a passenger car tire or a truck tire.

### Brief Description of the Drawings

The structure, operation, and advantages of the invention will become more apparent upon contemplation of the following description taken in conjunction with the accompanying drawings, wherein:
Figure 1 represents a schematic side view of an example tire stud;
Figure 2 represents a schematic top view of the tire stud of Figure 1;
Figure 3 represents a schematic side view of another example tire stud;
Figure 4 represents a schematic top view of the tire stud shown in Figure 3;
Figure 5 is a schematic cross section through a tire's crown portion including a tread with tread blocks comprising studs in accordance with an example of the invention;
Figure 6 is a schematic cross section of an essentially unworn tread block with two adjacent circumferential tread grooves, with the tread block comprising a stud in accordance with an example of the invention;
Figure 7 is a schematic cross section of the tread block of Figure 6 but in a further worn state; and
Figure 8 is a schematic cross section of the tread block shown in Figure 6 and Figure 7 but in a further worn state than in Figure 6 and Figure 7.

### Detailed Description of the Embodiments

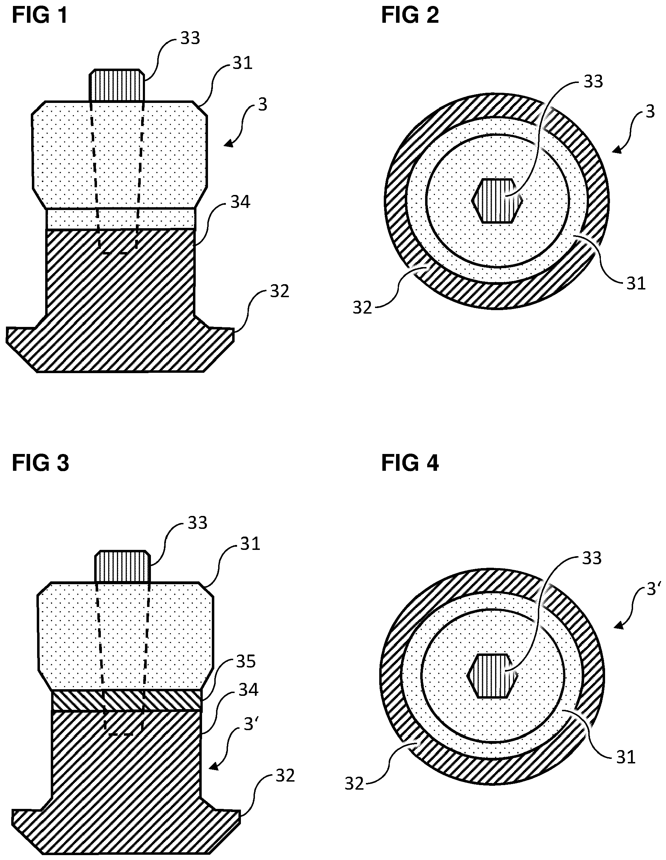

Figure 1 shows a schematic side view of a first example of a tire stud 3 in accordance with the invention. The stud 3 comprises an elongated pin 33 extending out of the top portion 31 of the stud 3 and extending also through the top portion 31 into a bottom portion 32 as shown by the dashed lines. In general, the stud 3 is supposed to be mounted in the tread of a tire, in particular into ribs and/or tread blocks of a tire such that the top portion 31 is mounted radially outward of the bottom portion 32. In other words, the bottom portion 32 is located radially inwards of the top portion 31 when the stud 3 is mounted in the tire. The bottom portion 32 or the top portion 31 may each comprise at least one protrusion or projection helping to anchor the stud 3 into a mounting hole in a tire tread. Preferably, the bottom portion 32 has a smaller diameter (measured perpendicular to the extension of the pin 33) at an upper end 34 of the bottom portion 32 than in a lower region of the bottom portion 32. Moreover, the maximum diameter of the bottom portion 32 is larger than the maximum diameter of the top portion 31, wherein the diameter of the latter portion 31 is again preferably larger than a diameter of the upper end region 34 of the bottom portion 32. The top portion 31 comprises a first polymer having a first color and the bottom portion 32 comprises a second polymer having a second color, different from the first one. Typically, the top portion 31 could have black or green color whereas the bottom portion 32 may have a red color.

Figure 2 is a top view of the stud 3 shown in Figure 1. In this example, the pin 33 has a hexagonal shape which may improve the anchoring of the pin 33 in the polymer material and/or may also increase the road grip, or in other words the non-skid behavior. Moreover, the bottom portion 32 protrudes or projects beyond the top portion 31 perpendicular to the pin 33. While it may be desirable that the projection of the bottom portion 32 is larger than the projection of the top portion 31, the top portion 31 may essentially extend as far as the bottom portion 32 away from the center line of the pin 33 (the central axis of the pin 33 in parallel to the length of the pin 33).

Figure 3 shows a side view of a second example of a tire stud 3'. Stud 3' is similar to stud 3 of Figures 1 and 2, with the main difference that the stud 3' comprises an intermediate portion 35 arranged between the top portion 31 and the upper end region 34 of the bottom portion 32, wherein the intermediate portion comprises a polymer-based material having a color different from the first and second color mentioned above. Typically, the color of the intermediate portion 35 could be yellow or orange.

In general, the used polymer-based material may be essentially the same in the whole stud body, with the only difference of including different dyes for achieving different visual appearance in terms of color.

Figure 4 is a top view of the stud 3' wherein the top view is the same as for stud 3 as shown in Figure 2. The same reference signs as in Figure 2 have been used for stud 3' where applicable.

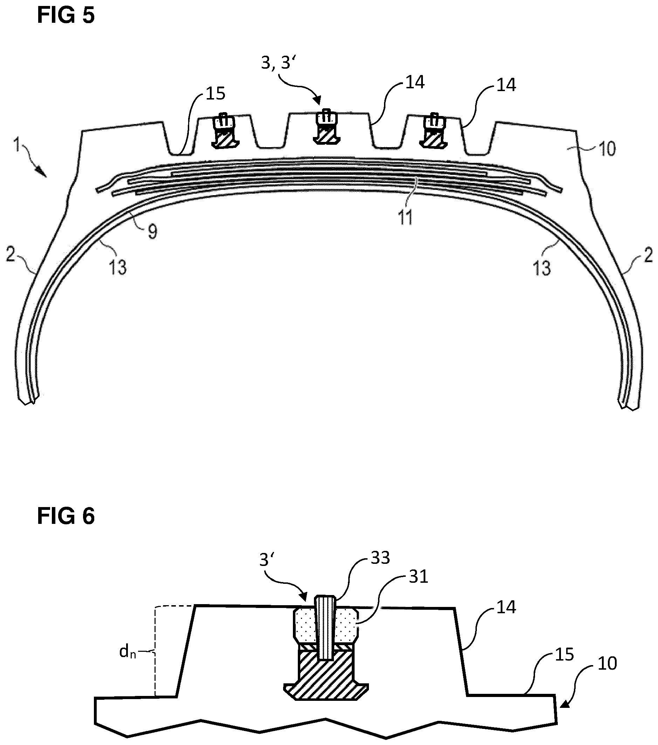

Figure 5 is a schematic partial cross section of a tire 1, showing essentially the tire crown area. For the sake of simplification bead areas of the tire 1 are not shown herein as those are not crucial for the present invention. The person skilled in the art knows how to design such bead areas of the tire 1. As shown in Figure 5, the tire 1 has also sidewalls 2, a tread 10, belt plies 11, a carcass ply 9 and an inner liner 13. Moreover, the tire tread 10 has four circumferential grooves 15 as well as ribs or tread blocks 14 adjacent said grooves 15. A plurality of tread blocks 14 have studs 3, 3' with the radial top portion of the studs aligned (flush) with the radially outer surface of the tread blocks 14. In this example, the tire 1 is essentially unworn or new. The pins of the studs 3, 3' protrude out of the tread 10, and the tread blocks 14 respectively, such that they increase the non-skid properties of the tire 1, in particular on icy roads or ice.

Figure 6 is a schematic cross section of a portion of the tread 10, showing a tread block 14 and two adjacent grooves 15. The tread block 14 comprises a stud 3', with its upper edge of its top portion 31 aligned with the radial outer edge of the tread block 14. Similar to the situation shown in Figure 5, stud 3' and tread block 14 are still essentially unworn, with the tread block 14 having a radial height dₙ. The radial height of the tread block 14 is measured from the bottom of an adjacent groove 15 to the radially outer edge of the tread block 14. The pin 33 has also its initial or original length and extends through the top and intermediate portions into the bottom portion of the stud 3'. The user would see a black or green color of the stud 3' when looking at the stud 3' located in the tread 10.

It is emphasized that the tread blocks shown in the examples of the present invention may have in general also other shapes than shown. In particular, when looking at the tread, said blocks do not need to have rectangular shapes, they may have other polygonal shapes or for instance other shapes known in the art of winter tire treads.

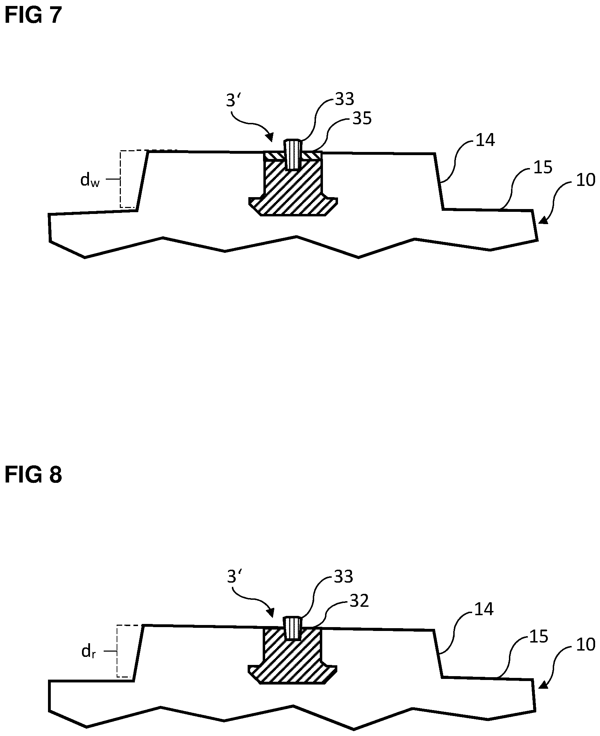

Figure 7 shows the tread 10 in a worn state. The tread block 14 has only the radial height d_{w} which is smaller than the height of the tread block dₙ in the unworn state. Consequently, the top portion of the stud 3' is worn and has in this example completely disappeared such that only the intermediate portion 35 is left at the radially outer surface of the tread block 14. The length of the pin 33 has decreased as well. As in aluminum studs, the pin 33 wears at a similar speed as the stud 3' such that the pin 33 extends from the tread block 14 into the outer radial direction of the tire 1. According to the situation depicted in Figure 7, visual inspection would show a yellow or orange color of the stud 3' when looking at the worn tread 10.

In Figure 8, the tread 10 and the particular tread block 14 are further worn compared to the situation depicted in Figure 7. Tread block height dᵣ is smaller than tread block height d_{w} shown in Figure 7. As a consequence, also the intermediate portion 35 has disappeared due to wear and the only remaining body portion of the stud 3' is the bottom portion 32. The pin 33 has only a relatively small length of extension into stud 3', respectively the bottom portion left. This may mean that stud 3' or its pin 33 may lose its function or may be lost soon. As a warning sign, the stud 3' could visually appear red at the tread surface.

Variations in the present invention are possible in light of the provided description. The illustrations and corresponding descriptions are not intended to restrict or limit the scope of the appended claims in any way. While certain representative embodiments, examples and details have been shown for the purpose of illustrating the subject invention, it will be apparent to those skilled in this art that various changes and modifications can be made therein without departing from the scope of the invention. It is, therefore, to be understood that changes may be made in the particular example embodiments described which will be within scope of the invention as defined by the following appended claims.

## Claims

1. An anti-skid tire stud (3, 3') having a stud body made of polymer-based material, the stud body comprising a top portion (31) comprising polymer-based material having a first color and a bottom portion (32) comprising polymer-based material having a second color which is different from the first color, and the stud (3, 3') further comprising a pin (33) extending out of the top portion (31) for contacting a road.

2. The anti-skid tire stud (3, 3') of claim 1,
wherein the stud (3, 3') has an elongated shape with two ends wherein the top portion (31) is arranged at a first end and the bottom portion (32) is arranged at the second end; and/or
wherein the pin (33) extends into the stud body in the direction of the bottom portion (32), and wherein the pin (33) extends optionally more than 5% of the length of the stud body out of the stud (3, 3').

3. The anti-skid tire stud (3, 3') of claim 1 or 2,
wherein the bottom portion (32) comprises an, optionally circumferential, projection for securing the stud in a hollow space for receiving the stud (3, 3') in a tire tread, and/or
wherein the stud (3, 3') comprises an intermediate portion (35) between the top portion (31) and the bottom portion (32) and wherein the intermediate portion (35) has a smaller diameter than the maximum diameter of at least one of the top portion (31) and the bottom portion (32).

4. The anti-skid tire stud (3, 3') according to one or more of the preceding claims, wherein the stud body comprises an intermediate portion (35) between the top portion (31) and the bottom portion (32), the intermediate portion (35) comprising a polymer-based material having a third color, wherein the intermediate portion (35) optionally extends to a laterally outer surface of the stud (3, 3') such that the laterally outer surface of the intermediate portion (35) has the third color.

5. The anti-skid tire stud (3, 3') according to one or more of the preceding claims, wherein
the pin (33) has at least one projection for securing the pin (33) in the body of the stud (3, 3'), and the projection is optionally located at an end of the pin (33) anchored in the body of the stud (3, 3'); and/or
the top portion (31) has a maximum diameter which is at least 5% larger than the diameter of an intermediate portion (35) arranged between the top portion (31) and the bottom portion (32), and wherein a maximum diameter of the bottom portion (32) is at least 10% larger than the maximum diameter of the top portion (31).

6. The anti-skid tire stud (3, 3') according to one or more of the preceding claims, wherein the top portion (31) and the bottom portion (32) extend to laterally outer surfaces of the stud (3, 3') such that the laterally outer surface of the top portion (31) has the first color and the laterally outer surface of the bottom portion (32) has the second color.

7. The anti-skid tire stud (3, 3') according to one or more of the preceding claims, wherein the pin (33) is made of a metal and/or a ceramic material, and preferably made of tungsten carbide.

8. The anti-skid tire stud (3, 3') according to one or more of the preceding claims, wherein
the polymer-based material is one of a thermoplastic material and a thermosetting material; and/or
the polymer-based material is or comprises one or more of: from 25 weight percent to 75 weight percent syndiotactic 1,2-polybutadiene, optionally having a melting point which is within the range of about 70ºC to 160ºC, and from 25 weight percent to 75 weight percent of at least one polydiene rubber cocurable with said syndiotactic 1,2-polybutadiene.

9. The anti-skid tire stud (3, 3') according to one or more of the preceding claims, wherein
the top portion (31) has a green color or a black color; and/or
the bottom portion (32) has a red color; and/or
the stud (3, 3') has an intermediate portion (35) between the top portion (31) and the bottom portion (32), wherein the intermediate portion (35) has an orange color or a yellow color.

10. The anti-skid tire stud (3, 3') according to one or more of the preceding claims, wherein
the pin (33) extends essentially in parallel to a length of the stud (3, 3') along a central axis of the stud (3, 3'); and/or
the pin (33) has one or more of a polygonal cross section and a bow-shaped cross section; and/or
the pin (33) extends at least over a third of the length of the stud when unworn, preferably through the entire top portion (31) into the bottom portion (32).

11. The anti-skid tire stud (3, 3') according to one or more of the preceding claims, further comprising an intermediate portion (35) between the top portion (31) and the bottom portion (32), the intermediate portion (35) having a section having a third color, wherein the pin (33) extends through the top portion (31) having the first color and the intermediate portion (35) having the third color into a part of the bottom portion (32) having the second color, and wherein optionally at least 5% of an unworn length of the pin (33) extends into the bottom portion (32) having the second color.

12. A tire (1) comprising a tread (10) having tread blocks (14), wherein at least one of the tread blocks (14) comprises at least one anti-skid stud (3, 3') according to one or more of the preceding claims.

13. The tire (1) of claim 12, wherein a top surface of the top portion (31) of the anti-skid stud (3, 3') is essentially flush with a radially outermost surface of the tread block (14) when the tread (10) is unworn, and wherein the pin (33) extends in a radial direction of the tire (1).

14. The tire of claim 12 or 13, wherein the pin (33) extends through the top portion (31) into the bottom portion (32).

15. Use of one or more anti-skid tire studs (3, 3') according to one or more of claims 1 to 11 in a tire tread (10) to indicate the wear of the studs (3, 3') upon driving and/or the wear of the tire tread (10) upon driving.

## Patentansprüche

1. Rutschfester Reifenspike (3, 3'), der einen Spikekörper aufweist, der aus einem Material auf Polymerbasis gefertigt ist, wobei der Spikekörper einen oberen Abschnitt (31), der ein Material auf Polymerbasis umfasst, das eine erste Farbe aufweist, und einen unteren Abschnitt (32) umfasst, der ein Material auf Polymerbasis umfasst, das eine zweite Farbe aufweist, die sich von der ersten Farbe unterscheidet, und wobei der Spike (3, 3') ferner einen Pin (33) umfasst, der sich aus dem oberen Abschnitt (31) heraus zum Berühren einer Straße erstreckt.

2. Rutschfester Reifenspike (3, 3') nach Anspruch 1,
wobei der Spike (3, 3') eine längliche Form mit zwei Enden aufweist, wobei der obere Abschnitt (31) an einem ersten Ende angeordnet ist und der untere Abschnitt (32) an dem zweiten Ende angeordnet ist; und/oder
wobei sich der Pin (33) in der Richtung des unteren Abschnitts (32) in den Spikekörper hinein erstreckt und wobei sich der Pin (33) optional mehr als 5 % der Länge des Spikekörpers aus dem Spike (3, 3') heraus erstreckt.

3. Rutschfester Reifenspike (3, 3') nach Anspruch 1 oder 2,
wobei der untere Abschnitt (32) einen, optional umlaufenden, Vorsprung zum Befestigen des Spikes in einem hohlen Raum zum Aufnehmen des Spikes (3, 3') in einer Reifenlauffläche umfasst, und/oder
wobei der Spike (3, 3') einen dazwischenliegenden Abschnitt (35) zwischen dem oberen Abschnitt (31) und dem unteren Abschnitt (32) umfasst und wobei der dazwischenliegende Abschnitt (35) einen kleineren Durchmesser als der maximale Durchmesser des oberen Abschnitts (31) und/oder des unteren Abschnitts (32) aufweist.

4. Rutschfester Reifenspike (3, 3') nach einem oder mehreren der vorhergehenden Ansprüche, wobei der Spikekörper einen dazwischenliegenden Abschnitt (35) zwischen dem oberen Abschnitt (31) und dem unteren Abschnitt (32) umfasst, wobei der dazwischenliegende Abschnitt (35) ein Material auf Polymerbasis umfasst, das eine dritte Farbe aufweist, wobei sich der dazwischenliegende Abschnitt (35) optional bis zu einer seitlichen äußeren Oberfläche des Spikes (3, 3') derart erstreckt, dass die seitliche äußere Oberfläche des dazwischenliegenden Abschnitts (35') die dritte Farbe aufweist.

5. Rutschfester Reifenspike (3, 3') nach einem oder mehreren der vorhergehenden Ansprüche, wobei
der Pin (33) wenigstens einen Vorsprung zum Befestigen des Pins (33) in dem Körper des Spikes (3, 3') aufweist und der Vorsprung sich optional an einem Ende des Pins (33) befindet, der in dem Körper des Spikes (3, 3') verankert ist; und/oder
der obere Abschnitt (31) einen maximalen Durchmesser aufweist, der wenigstens 5 % größer als der Durchmesser eines dazwischenliegenden Abschnitts (35) ist, der zwischen dem oberen Abschnitt (31) und dem unteren Abschnitt (32) angeordnet ist, und wobei ein maximaler Durchmesser des unteren Abschnitts (32) wenigstens 10 % größer als der maximale Durchmesser des oberen Abschnitts (31) ist.

6. Rutschfester Reifenspike (3, 3') nach einem oder mehreren der vorhergehenden Ansprüche, wobei sich der obere Abschnitt (31) und der untere Abschnitt (32) zu seitlich äußeren Oberflächen des Spikes (3, 3') derart erstrecken, dass die seitlich äußere Oberfläche des oberen Abschnitts (31) die erste Farbe aufweist und die seitlich äußere Oberfläche des unteren Abschnitts (32) die zweite Farbe aufweist.

7. Rutschfester Reifenspike (3, 3') nach einem oder mehreren der vorhergehenden Ansprüche, wobei der Pin (33) aus einem Metall und/oder einem keramischen Material gefertigt ist und vorzugsweise aus Wolframkarbid gefertigt ist.

8. Rutschfester Reifenspike (3, 3') nach einem oder mehreren der vorhergehenden Ansprüche, wobei
das Material auf Polymerbasis ein thermoplastisches Material oder ein duroplastisches Material ist; und/oder
das Material auf Polymerbasis ist oder Folgendes umfasst: von 25 Gew.-% bis 75 Gew.-% syndiotaktisches 1,2-Polybutadien, das optional einen Schmelzpunkt aufweist, der innerhalb des Bereichs von ungefähr 70 ºC bis 160 ºC liegt, und/oder von 25 Gew.-% bis 75 Gew.-% wenigstens eines Polydienkautschuks, der mit dem syndiotaktischen 1,2-Polybutadien covulkanisierbar ist.

9. Rutschfester Reifenspike (3, 3') nach einem oder mehreren der vorhergehenden Ansprüche, wobei
der obere Abschnitt (31) eine grüne Farbe oder eine schwarze Farbe aufweist; und/oder
der untere Abschnitt (32) eine rote Farbe aufweist; und/oder der Spike (3, 3') einen dazwischenliegenden Abschnitt (35) zwischen dem oberen Abschnitt (31) und dem unteren Abschnitt (32) aufweist, wobei der dazwischenliegende Abschnitt (35) eine orange Farbe oder eine gelbe Farbe aufweist.

10. Rutschfester Reifenspike (3, 3') nach einem oder mehreren der vorhergehenden Ansprüche, wobei
der Pin (33) sich im Wesentlichen parallel zu einer Länge des Spikes (3, 3') entlang einer mittleren Achse des Spikes (3, 3') erstreckt; und/oder
der Pin (33) einen polygonalen Querschnitt und/oder einen bogenförmigen Querschnitt aufweist; und/oder
der Pin (33), wenn nicht abgenutzt, sich wenigstens über ein Drittel der Länge des Spikes, vorzugsweise durch den gesamten oberen Abschnitt (31) in den unteren Abschnitt (32) hinein, erstreckt.

11. Rutschfester Reifenspike (3, 3') nach einem oder mehreren der vorhergehenden Ansprüche, der ferner einen dazwischenliegenden Abschnitt (35) zwischen dem oberen Abschnitt (31) und dem unteren Abschnitt (32) umfasst, wobei der dazwischenliegende Abschnitt (35) einen Bereich aufweist, der eine dritte Farbe aufweist, wobei sich der Pin (33) durch den oberen Abschnitt (31), der die erste Farbe aufweist, und den dazwischenliegenden Abschnitt (35), der die dritte Farbe aufweist, in einen Teil des unteren Abschnitts (32) hinein erstreckt, der die zweite Farbe aufweist, und wobei sich optional wenigstens 5 % einer nicht abgenutzten Länge des Pins (33) in den unteren Abschnitt (32) hinein erstreckt, der die zweite Farbe aufweist.

12. Reifen (1), der eine Lauffläche (10) umfasst, die Laufflächenblöcke (14) aufweist, wobei wenigstens einer der Laufflächenblöcke (14) wenigstens einen rutschfesten Spike (3, 3') nach einem oder mehreren der vorhergehenden Ansprüche umfasst.

13. Reifen (1) nach Anspruch 12, wobei eine obere Oberfläche des oberen Abschnitts (31) des rutschfesten Spikes (3, 3') im Wesentlichen bündig mit einer radial äußersten Oberfläche des Laufflächenblocks (14) ist, wenn die Lauffläche (10) nicht abgenutzt ist und wobei sich der Pin (33) in einer radialen Richtung des Reifens (1) erstreckt.

14. Reifen nach Anspruch 12 oder 13, wobei sich der Pin (33) durch den oberen Abschnitt (31) in den unteren Abschnitt (32) hinein erstreckt.

15. Verwendung eines oder mehrerer rutschfester Reifenspikes (3, 3') nach einem oder mehreren der Ansprüche 1 bis 11 in einer Reifenlauffläche (10), um die Abnutzung der Spikes (3, 3') bei einem Fahren und/oder die Abnutzung der Reifenlauffläche (10) bei dem Fahren anzuzeigen.

## Revendications

1. Crampon de bandage pneumatique du type s'opposant au patinage (3, 3') qui possède un corps de crampon qui est réalisé à partir d'une matière à base d'un polymère, le corps de crampon comprenant une portion de sommet (31) qui comprend une matière à base d'un polymère qui possède une première couleur et une portion de base (32) qui comprend une matière à base d'un polymère qui possède une deuxième couleur qui est différente de la première couleur, et le crampon (3, 3') comprenant en outre une broche (33) qui s'étend à l'extérieur de la portion de sommet (31) à des fins de mise en contact avec une route.

2. Crampon de bandage pneumatique du type s'opposant au patinage (3, 3') selon la revendication 1, dans lequel le crampon (3, 3') possède une configuration de forme allongée qui comporte deux extrémités, dans lequel la portion de sommet (31) est disposée à une première extrémité et la portion de base (32) est disposée à la deuxième extrémité ; et/ou dans lequel la broche (33) s'étend jusque dans le corps de crampon dans la direction de la portion de base (32) ; et dans lequel la broche (33) s'étend de manière facultative sur plus de 5 % de la longueur du corps de crampon à l'extérieur du crampon (3, 3').

3. Crampon de bandage pneumatique du type s'opposant au patinage (3, 3') selon la revendication 1 ou 2, dans lequel la portion de base (32) comprend une saillie, de manière facultative circonférentielle, destinée à la fixation du crampon dans un espace creux destiné à la réception du crampon (3, 3') dans une bande de roulement d'un bandage pneumatique; et/ou dans lequel le crampon (3, 3') comprend une portion intermédiaire (35) entre la portion de sommet (31) et la portion de base (32) ; et dans lequel la portion intermédiaire (35) possède un diamètre qui est inférieur au diamètre maximal d'au moins une portion qui est choisie parmi la portion de sommet (31) et la portion de base (32).

4. Crampon de bandage pneumatique du type s'opposant au patinage (3, 3') selon une ou plusieurs des revendications précédentes, dans lequel le corps de crampon comprend une portion intermédiaire (35) entre la portion de sommet (31) et la portion de base (32), la portion intermédiaire (35) comprenant une matière à base d'un polymère qui possède une troisième couleur; dans lequel la portion intermédiaire (35) s'étend de manière facultative dans la direction d'une surface du crampon (3, 3'), externe en dans la direction latérale, d'une manière telle que la surface de la portion intermédiaire (35), externe dans la direction latérale, possède la troisième couleur.

5. Crampon de bandage pneumatique du type s'opposant au patinage (3, 3') selon une ou plusieurs des revendications précédentes, dans lequel la broche (33) possède au moins une saillie qui est destinée à la fixation de la broche (33) dans le corps du crampon (3, 3'), et la saillie est disposée de manière facultative à une extrémité de la broche (33) qui est ancrée dans le corps du crampon (3, 3'); et/ou dans lequel la portion supérieure (31) possède un diamètre maximal qui est supérieur, à raison d'au moins 5 %, au diamètre d'une portion intermédiaire (35) qui est disposée entre la portion de sommet (31) et la portion de base (32) ; et dans lequel un diamètre maximal de la portion de base (32) est supérieur, à raison d'au moins 10 %, au diamètre maximal de la portion de sommet (31).

6. Crampon de bandage pneumatique du type s'opposant au patinage (3, 3') selon une ou plusieurs des revendications précédentes, dans lequel la portion de sommet (31) et la portion de base (32) s'étendent dans la direction de surfaces du crampon (3, 3'), externes dans la direction latérale, d'une manière telle que la surface de la portion de sommet (31), externe dans la direction latérale, possède la première couleur et la surface de la portion de base (32), externe dans la direction latérale, possède la deuxième couleur.

7. Crampon de bandage pneumatique du type s'opposant au patinage (3, 3') selon une ou plusieurs des revendications précédentes, dans lequel la broche (33) est réalisée à partir d'un métal et/ou d'une matière céramique, et de préférence est réalisée à partir de carbure de tungstène.

8. Crampon de bandage pneumatique du type s'opposant au patinage (3, 3') selon une ou plusieurs des revendications précédentes, dans lequel la matière à base d'un polymère représente une matière choisie parmi une matière thermoplastique et une matière thermodurcissable; et/ou la matière à base d'un polymère représente ou comprend une ou plusieurs matières choisies parmi le groupe comprenant : à raison de 25 % en poids à 75 % en poids, du 1,2-polybutadiène syndiotactique, qui possède de manière facultative un point de fusion qui se situe dans la plage allant d'environ 70 °C à 160 °C, et à raison de 25 % en poids à 75 % en poids, d'au moins un caoutchouc à base de polydiène, qui peut être vulcanisé de manière conjointe avec ledit 1,2-polybutadiène syndiotactique.

9. Crampon de bandage pneumatique du type s'opposant au patinage (3, 3') selon une ou plusieurs des revendications précédentes, dans lequel la portion de sommet (31) possède une couleur verte ou une couleur noire ; et/ou la portion de base (32) possède une couleur rouge; et/ou le crampon (3, 3') possède une portion intermédiaire (35) entre la portion de sommet (31) et la portion de base (32) ; dans lequel la portion intermédiaire (35) possède une couleur orange ou une couleur jaune.

10. Crampon de bandage pneumatique du type s'opposant au patinage (3, 3') selon une ou plusieurs des revendications précédentes, dans lequel la broche (33) s'étend essentiellement en parallèle à une longueur du crampon (3, 3') le long d'un axe central du crampon (3, 3') ; et/ou la broche (33) possède une ou plusieurs sections transversales choisies parmi une section transversale de forme polygonale et une section transversale de forme arquée ; et/ou la broche (33) s'étend au moins sur un tiers de la longueur du crampon à l'état non usé, de préférence à travers la totalité de la portion de sommet (31) jusque dans la portion de base (32).

11. Crampon de bandage pneumatique du type s'opposant au patinage (3, 3') selon une ou plusieurs des revendications précédentes, qui comprend en outre une portion intermédiaire (35) entre la portion de sommet (31) et la portion de base (32), la portion intermédiaire (35) possédant un tronçon qui possède une troisième couleur; dans lequel la broche (33) s'étend à travers la portion de sommet (31) qui possède la première couleur et la portion intermédiaire (35) qui possède la troisième couleur jusque dans une partie de la portion de base (32) qui possède la deuxième couleur ; et dans lequel, de manière facultative, au moins 5 % d'une longueur de la broche (33), à l'état non usé, s'étend jusque dans la portion de base (32) qui possède la deuxième couleur.

12. Bandage pneumatique (1) qui comprend une bande de roulement (10) qui possède des pavés de gomme (14) ; dans lequel au moins un des pavés de gomme (14) comprend au moins un crampon de bandage pneumatique du type s'opposant au patinage (3, 3') en conformité avec une ou plusieurs des revendications précédentes.

13. Bandage pneumatique (1) selon la revendication 12, dans lequel une surface supérieure de la portion de sommet (31) du crampon s'opposant au patinage (3, 3') s'étend essentiellement à fleur avec une surface du pavé de gomme (14) la plus externe dans la direction radiale, lorsque la bande de roulement (10) est à l'état non usé; et dans lequel la broche (33) s'étend dans une direction radiale du bandage pneumatique (1).

14. Bandage pneumatique selon la revendication 12 ou 13, dans lequel la broche (33) s'étend à travers la portion de sommet (31) jusque dans la portion de base (32).

15. Utilisation d'un ou de plusieurs crampons de bandage pneumatique du type s'opposant au patinage (3, 3') selon une ou plusieurs des revendications 1 à 11, dans une bande de roulement (10) d'un bandage pneumatique dans le but d'indiquer l'usure des crampons (3, 3') au cours de la conduite et/ou l'usure de la bande de roulement (10) du bandage pneumatique lorsqu'on roule.
